# FASCICULE DE BREVET EUROPEEN

(11) **EP 1 364 440 B1**
(45) Date de publication et mention de la délivrance du brevet: **13.11.2013**
(21) Numéro de dépôt: 02713000.4
(22) Date de dépôt: 28.02.2002
(51) Int. Cl.: H02K 3/12, H02K 3/50

(54) **PROCEDE D'ASSEMBLAGE DE SEGMENTS CONDUCTEURS D'UN BOBINAGE DE ROTOR OU DE STATOR DE MACHINE ELECTRIQUE ROTATIVE**
VERFAHREN ZUM VERBINDEN VON LEITERSEGMENTEN EINER ROTOR- ODER STATOR-WICKLUNG EINER ROTIERENDEN ELEKTRISCHEN MASCHINE
METHOD FOR ASSEMBLING CONDUCTIVE SEGMENTS OF A ROTOR WINDING OR STATOR WINDING IN A ROTARY ELECTRIC MACHINE

(30) Priorité: 28.02.2001 FR 0102735
(43) Date de publication de la demande: 26.11.2003
(73) Titulaire: VALEO EQUIPEMENTS ELECTRIQUES MOTEUR, 94017 Créteil (FR)
(72) Inventeur: LENOIR, Romaric, F-62360 Condette (FR); ARRIGHI, Sébastien, F-78000 Versailles (FR); EVEN, Denis, F-75012 Paris (FR); HEVIA, Thierry, F-62520 Le Touquet (FR)
(74) Mandataire: Gamonal, Didier
(86) Numéro de dépôt international: PCT/FR2002/000719
(87) Numéro de publication internationale: WO 2002/069472

(56) Documents cités:
- WO-A-88/09080
- US-A- 5 113 574
- PATENT ABSTRACTS OF JAPAN vol. 2001, no. 5, 17 mai 2001 (2001-05-17) -& JP 2001 054263 A (DENSO CORP), 23 février 2001 (2001-02-23) -& EP 1 081 830 A (DENSO CORPORATION) 7 mars 2001 (2001-03-07)

## Description

### Domaine de l'invention

La présente invention se rapporte à un procédé d'assemblage de segments conducteurs d'un bobinage de rotor ou de stator de machine électrique rotative.

Plus particulièrement, l'invention concerne un procédé d'assemblage de segments conducteurs d'un bobinage de rotor ou de stator d'un alternateur de véhicule automobile.

### Etat de la technique

Selon une configuration classique, les bobinages de stator d'alternateur de véhicule automobile sont réalisés en utilisant des segments conducteurs de bobinage en forme de U préformés insérés, par leur base, dans des fentes ménagées dans un noyau du stator, de sorte que les zones d'extrémité libre mutuellement opposées des segments conducteurs s'étendent en saillie au-delà de ce dernier, et en soudant les segments conducteurs deux à deux pour former des enroulements continus autour du noyau.

Une telle technique d'assemblage est par exemple décrite dans le document EP-A-1 043 828. Selon cette technique, les segments conducteurs sont généralement soudés en utilisant un soudage de type à l'arc, par exemple de type TIG par création d'une décharge entre une électrode et les zones d'extrémité libres respectives des segments.

Les segments conducteurs étant généralement constitués d'un fil en matériau électriquement conducteur, par exemple en cuivre, revêtu d'une couche de matériau électriquement isolant, par exemple d'émail, il est souvent souhaitable de protéger le revêtement isolant de la chaleur dégagée lors du soudage. A cet effet, on utilise généralement une tension d'amorçage variant de façon intermittente, de sorte que les arcs engendrés par les impulsions de tension soient appliqués dans des zones respectives des zones de soudage. On limite ainsi la quantité de chaleur dégagée en dehors des zones de soudage. Cette technique engendrant des régimes transitoires non maîtrisés lors de l'amorçage des arcs, il a été proposé d'utiliser un élément de protection s'insérant entre deux zones d'extrémité de deux segments adjacents à souder, de manière à protéger le reste des segments conducteurs.

Ainsi, selon la technique décrite dans le document précité, on utilise un mandrin de protection enserrant les éléments conducteurs à souder de manière à, d'une part, éviter que la chaleur dégagée lors du soudage n'altère la couche de matériau électriquement isolant entre les zones de soudage et, d'autre part, conduire la chaleur vers des zones devant être soudées, de manière à procéder à un préchauffage préalable.

Cette technique représente cependant un inconvénient majeur, dans la mesure où elle nécessite de prévoir un dénudage préalable des extrémités libres des segments conducteurs à souder, ce qui augmente considérablement les coûts de fabrication, et est difficilement envisageable dans des chaînes de fabrication à haute cadence, dans la mesure où l'opération de dénudage est relativement longue à mettre en oeuvre.

En outre, lorsque l'étape de dénudage est réalisée mécaniquement, afin d'enlever totalement la couche de matériau électriquement isolante, un usinage de la surface périphérique du fil conducteur se produit inévitablement, ce qui engendre une réduction de la section utile des segments conducteurs.
Le document US-A-5113574 divulgue un procédé et un dispositif pour la connexion de fils de bobine d'une armature à une lame.

Le but de l'invention est de pallier ces inconvénients.

Elle a donc pour objet un procédé d'assemblage de segments conducteurs d'un bobinage de rotor ou de stator d'une machine électrique rotative, comprenant les étapes consistant à:
- insérer les segments conducteurs dans des fentes ménagées dans un noyau du rotor ou du stator de sorte que les segments s'étendent en saillie au-delà de ce dernier par leurs extrémités libres,
- plier les extrémités libres des segments conducteurs, et
- souder deux à deux les segments conducteurs par leurs extrémités libres en saillie, pour former un bobinage autour du rotor ou du stator,
caractérisé en ce que les segments conducteurs étant constitués chacun d'un fil en matériau électriquement conducteur revêtu d'une couche de matériau électriquement isolant, la couche de matériau électriquement isolant est supprimée, dans la zone de soudage des segments conducteurs, par le moyen utilisé pour le soudage de ces derniers: et en ce que l'étape de suppression de la couche de matériau électriquement isolant est réalisée lors du soudage des segments conducteurs.

Ainsi, il n'est plus nécessaire de prévoir une étape préalable de dénudage tel que par exemple un dénudage mécanique de la couche de matériau électriquement isolant. En outre, on réduit considérablement les investissements engendrés pour l'assemblage des segments. La solution est donc rapide, simple et économique.

Il a par ailleurs été constaté, de manière surprenante, que lorsque l'on utilise un soudage de type par faisceaux d'électrons ou par laser, des soudures de très bonne qualité peuvent être réalisées sans procéder à un dénudage préalable des segments conducteurs ou en présence de reste de matériaux électriquement isolants, lorsque l'on met en oeuvre une étape préalable de dénudage partiel, c'est à dire n'altérant pas le fil conducteur.

Ce procédé d'assemblage peut également comporter une ou plusieurs des caractéristiques suivantes, prises isolément ou selon toutes les combinaisons techniquement possibles :
- postérieurement au soudage des segments conducteurs, on procède à une étape d'élimination de débris de matériau électriquement isolant, engendrés lors du soudage ;
- l'étape d'élimination des débris comporte une phase de brossage des zones soudées suivie d'une phase d'aspiration ;
- le soudage est un soudage de type par faisceau d'électrons ;
- l'axe général du faisceau d'électrons est incliné d'environ 45° par rapport à l'axe du rotor ou du stator.
- au cours du soudage, le faisceau d'électrons est animé d'un mouvement de balayage sur toute la zone de soudage.
- le soudage est un soudage laser précis et rapide permettant d'obtenir des cordons pénétrants de grande précision géométrique.
- le moyen de soudage est piloté de manière séquentielle : le faisceau étant allumé puis éteint alternativement entre chaque soudure.

### Brève description des dessins

D'autres buts, caractéristiques et avantages de l'invention ressortiront de la description suivante, donnée uniquement à titre d'exemple, et faite en référence aux dessins annexés sur lesquels :
- la figure 1 est une vue en perspective d'une portion de stator d'alternateur de véhicule automobile pourvu d'un bobinage réalisé conformément à l'invention ;
- la figure 2 est une vue en coupe transversale d'une portion du stator de la figure 1 ;
- la figure 3 est une vue schématique, à plus grande échelle du stator de la figure 1 ;
- la figure 4 est une vue du point d'impact du faisceau laser sur les extrémités libres à souder des segments conducteurs ;
- les figures 5 et 6 sont des vues analogues respectivement aux figures 1 et 2 pour un deuxième exemple de réalisation ;
- la figure 7 est une vue partielle en plan des extrémités à souder des segments conducteurs pour ce deuxième exemple de réalisation ;
- la figure 8 est une vue analogue à la figure 7 après soudage ;
- la figure 9 est une vue partielle en perspective des extrémités soudées du deuxième exemple de réalisation ;
- la figure 10 est une variante de la figure 3, correspondant à un troisième exemple de réalisation de l'invention, montrant en plan le trajet du faisceau laser par rapport aux extrémités à souder ;
- la figure 11 est une vue analogue à la figure 4 pour le troisième exemple de réalisation de la figure 10 ;
- la figure 12 est une vue analogue à la figure 8 pour un quatrième exemple de réalisation de l'invention ;
- les figures 13 et 14 sont des vues analogues à la figure 8 pour respectivement un cinquième et un sixième exemple de réalisation de l'invention.

### Exemples de réalisation préférés de l'invention

Dans l'exposé qui va suivre, on va décrire l'assemblage d'un bobinage de stator d'un alternateur de véhicule automobile. Cependant, l'invention s'applique également, le cas échéant, à l'assemblage d'un bobinage de rotor d'un alternateur, et de façon générale à l'assemblage d'un rotor ou d'un stator d'une machine électrique rotative.

Ainsi qu'on le sait un alternateur conventionnel de véhicule automobile comporte un rotor solidaire d'un arbre de rotor, dont les extrémités axiales sont supportées à rotation par un support creux destiné à être monté sur une partie fixe du véhicule automobile. Ce support porte intérieurement à sa périphérie externe un stator, décrit ci-après, entourant le rotor. Dans cet alternateur le rotor est conformé pour former un inducteur, tandis que le stator est conformé pour constituer un induit.

Le support comporte deux pièces appelées respectivement palier avant et palier arrière. Chaque palier présente centralement un logement pour le montage d'un roulement à billes dans lequel est montée l'extrémité concernée de l'arbre du rotor. Cet arbre s'étend à l'extérieur du palier avant pour porter un organe d'entraînement, classiquement une poulie, pour entraînement en rotation du rotor par le moteur thermique du véhicule via un dispositif de transmission de mouvement comportant de manière conventionnelle au moins une courroie. Comme décrit par exemple dans le document FR-A- 2 806 224, déposé le 09/03/2001, l'alternateur peut être du type réversible et constituer un démarreur pour le véhicule automobile en sorte que le rotor peut également entraîner en rotation l'arbre de rotor et l'organe d'entraînement pour notamment démarrer le moteur thermique du véhicule automobile.

Le palier arrière porte un porte-balais relié électriquement à un régulateur de tension. Dans certaines réalisations le palier arrière porte également un dispositif de redressement, tel que des diodes ou des transistors du type MOSFET, pour redresser le courant alternatif produit dans le bobinage 14 du stator décrit ci-après.

En variante le dispositif de redressement est à l'écart du palier arrière comme décrit dans le document FR-A-2 806 224.

Les balais du porte-balais sont destinés à coopérer avec des bagues collectrices portées par l'extrémité arrière de l'arbre du rotor. Ces bagues sont reliées aux extrémités d'au moins un bobinage d'excitation, que présente le rotor. Dans le document FR-A- 2 806 224 précité il est prévu un bobinage d'excitation et le rotor est du type à griffes, c'est à dire du type présentant deux roues polaires à dents définissant des pôles magnétiques lorsque le bobinage d'excitation est alimenté électriquement. Des aimants permanents sont en variante montés entre les dents d'orientation axiale pour augmenter le flux magnétique d'excitation.

En variante le rotor est à pôles saillants, comme décrit par exemple dans le document PCT/FR02/00037 déposé le 05/01/2002, en sorte que plusieurs bobinages d'excitation sont prévus.

L'alternateur est dans un mode de réalisation refroidi par eau ; son support comportant un canal pour circulation d'un fluide de refroidissement tel que le liquide de refroidissement du moteur thermique du véhicule automobile.

En variante l'alternateur est refroidi par air de manière connue ; le rotor portant de préférence à au moins l'une de ses extrémités axiales un ventilateur interne, engendrant un flux radial et/ou axial, disposé à l'intérieur du support pour circulation de l'air comme visible dans les deux documents précités FR-A-2 806 224 et PCT/FR02/00037. Pour plus de précisions on se reportera à ces documents.

De préférence un ventilateur est prévu à chaque extrémité du rotor.

Dans tous les cas les paliers avant et arrière sont ajourés pour circulation de l'air.

En variante dans le cas ou l'alternateur est refroidi par eau, on peut doter le rotor d'au moins un ventilateur engendrant un flux axial.

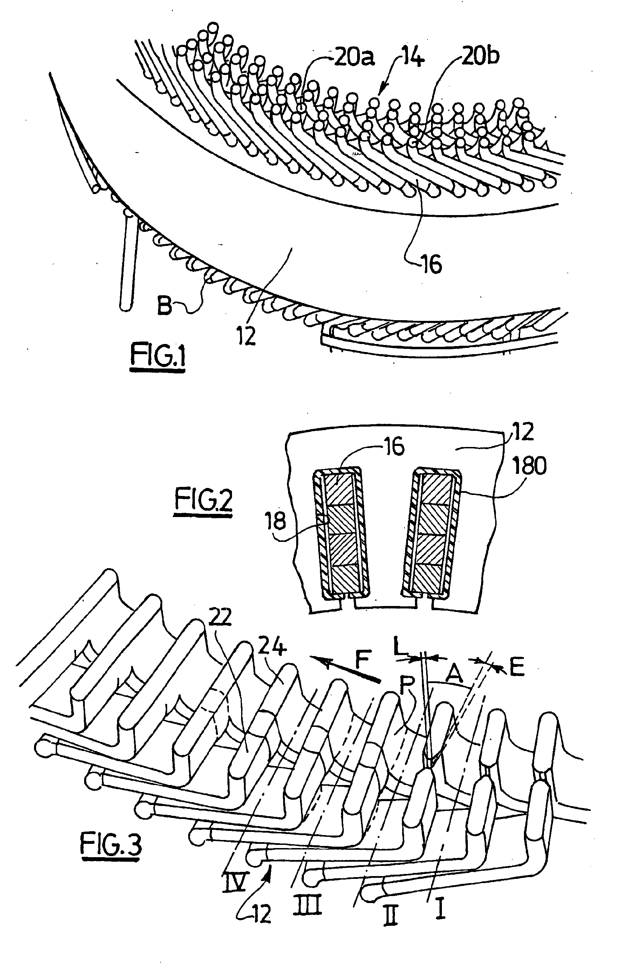

En référence aux figures 1 et 2, on voit que le stator pour alternateur polyphasé de véhicule automobile comporte essentiellement un noyau 12 supportant un bobinage 14 constitué d'un assemblage de segments électriquement conducteurs, tels que 16. Ce type de bobinage est appelé enroulements avec barres. Le noyau 12 est porté par le support de l'alternateur à la périphérie externe de celui-ci avec éventuellement, comme décrit dans le document FR-A- 2 806 224, interposition d'éléments élastiques.

De manière classique, le noyau 12 est réalisé à partir de feuilles métalliques cylindriques et est pourvu de fentes ou encoches, telles que 18, régulièrement réparties le long de la périphérie du noyau 12 et dans chacune desquelles s'insère un segment conducteur 16 avec interposition, de manière connue, d'un isolant électrique 180, par exemple à base de mica, entre les segments et les bords des fentes 18. Les fentes 18 sont ici du type semi-fermées et débouchent à la périphérie interne du noyau 12 à la faveur d'une ouverture de largeur inférieur à la largeur des fentes. En variante les fentes sont du type fermé.

Chaque segment conducteur 16 a une forme générale de U dont la base B s'étend en saillie à partir de l'une des grandes faces du noyau 12 et dont les branches s'insèrent chacune dans une encoche 18 respective de sorte que leurs extrémités libres s'étendent en saillie au-delà de l'autre grande face du noyau 12 du stator, comme visible sur la figure 1. Ces extrémités libres sont appelées chignons et sont implantées au droit des ventilateurs pour être bien refroidis par circulation de l'air comme visible par exemple dans les documents EP-A-1 043 828 et FR-A- 2 806 224 précités.

Plus particulièrement, et comme représenté à la figure 1, par exemple, deux branches 20-a et 20-b d'un même segment de bobinage 16 sont insérées dans deux encoches 18 distantes d'un nombre d'encoches prédéterminé dans lesquelles sont insérées des branches de segments conducteurs adjacents.

On voit également à la figure 1 une des sorties des phases. Pour plus de précisions, on se reportera au document PCT/FR01/04147 déposé le 21 décembre 2001.

Comme visible sur la figure 2, chaque segment conducteur a une section en coupe transversale de forme généralement rectangulaire et est revêtu d'une couche électriquement isolante pour que les segments soient isolés électriquement les uns des autres dans les fentes 18.

L'une des branches 20-a de chaque segment 16 vient s'insérer dans une portion radialement interne d'une fente 18 respective, l'autre branche 20-b venant s'insérer dans une portion radialement externe d'une autre fente respective 18 pour formation d'au moins deux couches superposées radialement par fente. Le montage est ici réalisé par enfilage axial des branches 20-a, 20-b dans les fentes. En variante le montage est réalisé par enfilage radial desdites branches dans des fentes ouvertes transformées en fentes semi-fermées après la mise en place des segments conducteurs (des barres) par rabattement de matière comme décrit dans le document FR-A- 631 056.

Comme on le voit sur la figure 1, après montage de l'ensemble des segments conducteurs 16 du stator, toutes les fentes 18 sont pourvues de branches de segments conducteurs 16. Postérieurement à cette étape de montage des segments conducteurs sur le noyau 12, on procède à une étape de pliage des extrémités libres des segments conducteurs de manière à, par exemple, plier les extrémités libres des segments conducteurs situés en position radialement externe dans le sens horaire, en considérant le sens de rotation du rotor, et les zones d'extrémité des segments conducteurs en position radialement interne dans le sens anti-horaire. De préférence, ces extrémités libres sont pliées selon un angle de 45° par rapport à l'axe général du rotor.

Pour procéder à cette opération, par exemple, on utilise des barillets rotatifs munis d'encoches de préhension destinées chacune à recevoir une extrémité libre d'un segment conducteur, chaque barillet étant utilisé pour le pliage d'un ensemble de segment conducteur, soit dans le sens horaire, soit dans le sens anti-horaire.

Après avoir réalisé ce montage et cette étape de pliage, les extrémités libres mutuellement opposées de branches situées dans une même fente 18 sont soudées, comme cela est classique, de manière à former un bobinage continu autour du stator.

Dans l'exemple de réalisation visible sur les figures 1 et 2, le stator est agencé de manière à être pourvu, pour chaque fente 18, de quatre branches de segments conducteurs formant à l'extérieur du corps 12 deux paires d'extrémité libres 22 et 24 de segments conducteurs 16 écartées l'une de l'autre en vue d'être soudées.

On peut adopter les dispositions décrites dans le document PCT/FR01/04147 précité.

Bien entendu, l'invention s'applique également à tout autre agencement selon lequel les fentes sont pourvues chacune d'un nombre quelconque de branches de segments conducteurs, par exemple de deux branches de segments conducteurs, en fonction du nombre de spires et de phases à obtenir.

Par exemple, les segments conducteurs sont réalisés à partir d'un fil de cuivre électriquement conducteur revêtu d'une couche électriquement isolante d'émail.

Pour la réalisation d'un bobinage continu le long de la périphérie du noyau 12, les extrémités libres en regard 22 et 24 des segments conducteurs sont soudées l'une à l'autre. Pour ce faire, on utilise un procédé de soudage sans contact, de préférence un soudage de type par faisceau d'électrons ou de préférence un soudage laser.

Ces techniques de soudage sont connues en elles-mêmes. Elles ne seront donc pas décrites en détail par la suite.

On notera cependant que ces techniques de soudage permettent de réaliser un soudage efficace sans procéder à une étape de dénudage préalable des extrémités libres correspondantes des segments conducteurs, la couche de matériau électriquement isolant revêtant le fil en matériau électriquement conducteur étant dénaturée au cours du soudage proprement dit, sous l'action de la chaleur engendrée par le moyen de soudage utilisé conduisant à une fusion du métal.

Comme visible sur la figure 3, dans le cas où l'on utilise un faisceau laser L, celui-ci, dans une forme de réalisation, s'étend parallèlement aux zones d'extrémité libre des segments conducteurs 22 et 24 en regard à souder, c'est-à-dire parallèlement à l'axe de symétrie axial du stator.

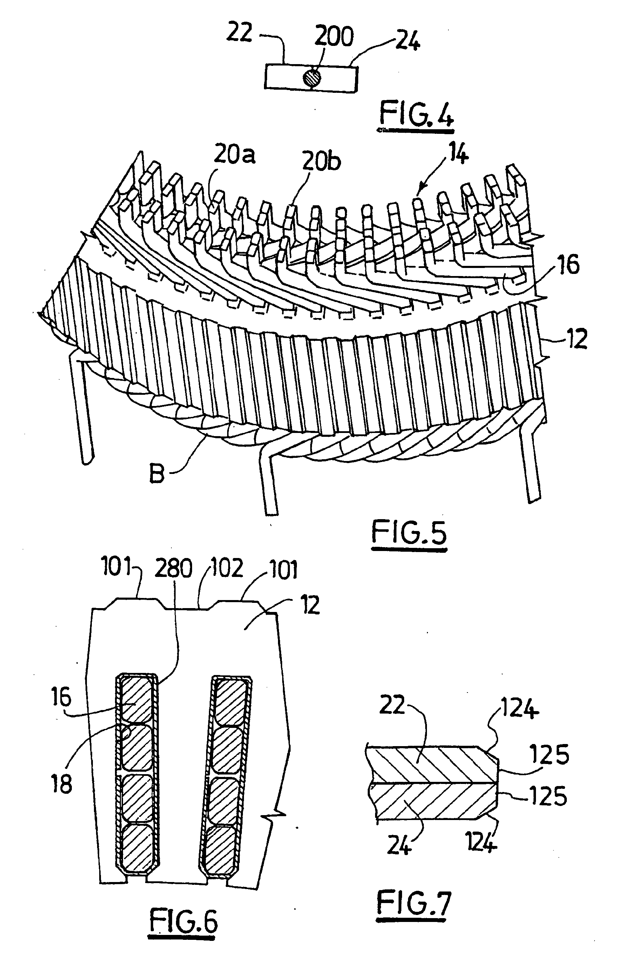

On voit à la figure 4 le point d'impact 200 du faisceau laser sur les extrémités libres à souder des segments conducteurs.

Ce point d'impact est ici globalement circulaire.

Au contraire, en variante, lorsque l'on utilise un faisceau d'électrons E, visible en pointillés sur cette figure, le faisceau est de préférence incliné selon un angle A d'environ 45° par rapport à l'axe du stator.

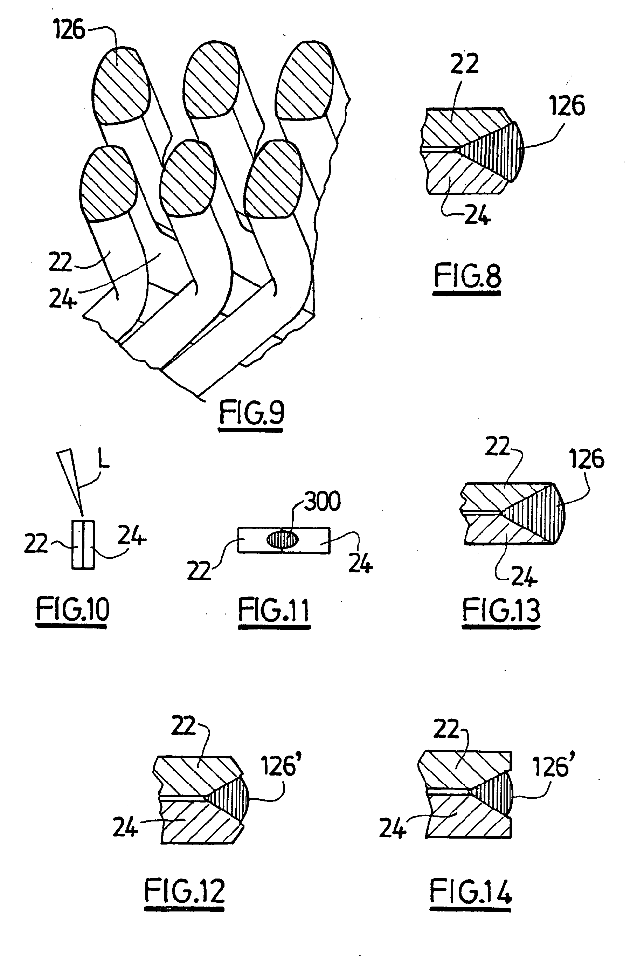

Bien entendu il est possible d'incliner le faisceau laser par rapport à l'axe axial du stator comme représenté schématiquement à la figure 10, le point d'impact 300 alors de forme oblongue étant visible à la figure 11.

Cette inclinaison permet d'augmenter les tolérances du procédé.

Dans ces différents modes de réalisation, le faisceau laser ou d'électrons engendré peut être soit continu soit discontinu.

Le stator 12 est, quant à lui, entraîné en rotation selon la flèche F de manière à présenter successivement chacune des extrémités de segments conducteurs à souder en regard du moyen de soudage utilisé.

Ainsi, au cours de la rotation du stator 12 on distingue quatre zones dans le stator, désignées respectivement par les signes I, II, III et IV sur la figure 3, qui correspondent chacune à une phase spécifique du procédé d'assemblage des segments.

La zone I correspond à une zone non soudée. Les extrémités libres 22 et 24 des segments conducteurs se présentent alors sous une forme non dénudée et sont dès lors constituées chacune d'un fil en matériau électriquement conducteur revêtu d'une couche de matériaux électriquement isolante.

Lors de la phase II consécutive, deux extrémités adjacentes, ici en contact, de segments conducteurs se situent en regard d'un moyen de soudage et sont soumises à l'action du faisceau laser ou d'électrons utilisés.

Comme mentionné précédemment, le faisceau peut être soit permanent soit intermittent. Lorsque le faisceau est un faisceau d'électrons, celui-ci peut être permanent. Cependant, lorsque l'on utilise un faisceau laser, de préférence, le laser est piloté de manière que son fonctionnement soit séquentiel et coïncide avec la mise en rotation pas à pas du stator 12. Plus précisément on effectue des tirs précis et rapides au laser de manière cadencée sans avoir à travailler sous vide comme dans le soudage à faisceau d'électrons ou sous gaz neutre comme dans un soudage du type TIG nécessitant d'assurer une circulation de courant entre une électrode et les extrémités libres des segments conducteurs à assembler et donc de retirer par avance l'isolant électrique.

Pendant le soudage le faisceau laser est fixe par rapport au noyau 12 équipé des extrémités libres en regard 22 et 24 des segments électriquement conducteurs à souder, ce qui est optimal pour doser, notamment par action sur la durée, et concentrer l'énergie du faisceau sans qu'il soit nécessaire de préchauffer et de dénuder les extrémités libres en regard 22 et 24. En outre cela minimise la distance sur laquelle l'émail des extrémités 22 et 24 se trouve altéré par la chaleur du soudage.

Ce soudage laser permet donc d'obtenir des soudures de bonne qualité et de bonne géométrie.

De préférence le soudage laser est réalisé en régime pulsé ce qui permet de quantifier avec précision l'énergie utilisée pour chaque soudure.

Cette maîtrise de l'énergie permet d'assurer une parfaite reproductibilité de la géométrie des liaisons entre les extrémités 22 et 24 sans l'utilisation de tout autre moyen connexe.

Ici les tirs au laser sont réalisés par exemple durant 0,05 à 0,06 secondes. Ensuite on tourne le noyau 12 équipé des segments conducteur ; le laser étant alors inactif.

Autrement dit, le moyen de soudage, ici du type laser, est piloté de manière séquentielle, le faisceau étant allumé lors du soudage puis éteint entre chaque soudure.

On notera également que, dans le cas où l'on utilise un faisceau d'électrons, celui-ci est animé d'un mouvement de balayage de manière à irradier toute la zone de soudage délimitée par les bords en regard des extrémités libres des segments conducteurs.

Au cours de la phase II de soudage proprement dite, la couche de matériau électriquement isolant, en l'espèce de l'émail, est dénaturée par brûlage. Il se forme ainsi, après soudage (phase III), dans une zone soumise à la chaleur dégagée par le moyen de soudage, une pellicule P constituée de débris d'émail dénaturé. Cette pellicule s'étend selon une hauteur relativement réduite, laquelle correspond sensiblement à la zone de soudage, le reste de la couche électriquement isolante restant intact.

Au cours de la phase IV ultérieure, cette pellicule P est éliminée par tout moyen approprié, par exemple par un brossage suivi d'une phase d'aspiration.

Avantageusement un soufflage est assuré entre les segments conducteurs du stator en-dessous des soudures, pour permettre d'éviter la pollution des segments conducteurs par des résidus de soudage. Ce soufflage limite les risques de court-circuit.

Dans un autre mode de réalisation (figures 5 à 9 ) les extrémités libres à souder 22 et 24 ont une forme rétreinte comme décrit dans le document DE-A-37 04 780. Ici ces extrémités 22 et 24 présentent chacune un chanfrein d'angle 124 compris entre 45° et 55° (45° +/- 10°) et un bord plat 125 de largeur comprise entre 25% et 50% de la largeur des segments 16 ; les faces des extrémités 22 et 24 destinées à venir en contact étant dépourvues de chanfrein. Ces chanfreins permettent, de manière connue, d'introduire aisément les segments conducteurs dans les fentes 18.

De bons résultats ont été obtenus pour des segments 16 non dénudés de largeur égale à au moins 2 mm, l'émail ayant un effet de stabilisation. Les chanfreins favorisent le soudage car cela permet de mieux localiser la chaleur.

On obtient des cordons de soudage 126 du type pénétrant avec un triangle interne ayant ici une base égale à la largeur d'un segment 16 et une hauteur égale à 50% de la largeur du fil. La pointe du triangle s'étend axialement plus à l'intérieur que les chanfreins 124.

Comme visible à la figure 8, un jeu existe entre les deux extrémités après soudage, ce jeu provenant de l'altération (dénudage) de l'émail lors du soudage conduisant à une fusion du métal. En raccourcissant le temps de soudage on peut obtenir un cordon de soudage du type de celui de la figure 12, c'est-à-dire un soudage pénétrant moins profond.

Dans cette figure 12 on a fait apparaître également un jeu dû à l'altération de l'émail lors du soudage.

Le cordon 126' de la figure 12 ne fait pas saillie par rapport aux segments conducteurs.

Ces cordons 126,126' ont dans tous les cas une faible épaisseur, comme mieux visible à la figure 9, en sorte qu'aucun court-circuit n'est à craindre. Une circulation d'air est donc favorisée au niveau des cordons.

Le procédé d'assemblage est économique par rapport au procédé décrit dans le document EP-A-1 081 831 nécessitant un déplacement relatif des extrémités à souder par rapport à un arc électrique pour orienter les soudures.

Ici aucun mouvement relatif n'est nécessaire du fait de la formation de cordons de soudure pénétrant. Cela favorise le refroidissement du bobinage 14.

En effet un ventilateur, de manière précitée, est implanté radialement en dessous des extrémités soudées 22 et 24 de faible épaisseur en sorte que la constitution de celles-ci favorise le passage de l'air et donc un bon refroidissement de l'alternateur ainsi qu'une diminution des bruits.

L'alternateur, ici du type polyphasé, peut donc avoir une grande puissance.

On notera que les arêtes des segments 16 sont ici arrondies comme mieux visible à la figure 6, en sorte que cela favorise le soudage.

Dans le mode de réalisation des figures 5 à 9 l'isolant électrique 280, intercalé entre les bords des fentes 18 et les segments conducteurs 16, est ouvert comme à la figure 2 mais sont ouverture est adjacente à l'un des bords latéraux de la fente 18 en sorte que l'ouverture interne de la fente 18 est fermé par l'isolant 280 contrairement au mode de réalisation de la figure 2. L'étanchéité est meilleure.

Dans le mode de réalisation des figures 5 à 9 la périphérie externe du corps 18 est cannelée avec donc formation de dents 101, ici de forme trapézoïdales, séparées par des encoches 102. Les dents 101 sont en regard des fentes 18. Ces dispositions favorisent le refroidissement du stator tout en conduisant à une économie de matière lors de la fabrication du corps 12. On peut réaliser le corps par enroulement d'une bande de matière ou la formation de bandes de matière que l'on cintre. Dans ce mode de réalisation les arêtes des segments sont plus arrondies que dans le mode de réalisation des figures 1 à 3.

Bien entendu la section globalement rectangulaire des segments est dans une forme de réalisation globalement carrée.

Les segments conducteurs sont ici mécaniquement en contact dans une fente au niveau de leur largeur. L'inverse est possible tout dépendant de l'écart circonférentiel entre deux fentes 18 consécutives.

Bien entendu la présente invention n'est pas limitée aux exemples de réalisation décrits.

Ainsi, de manière précitée, le procédé d'assemblage selon l'invention est applicable au rotor de l'alternateur, par exemple à un alternateur appartenant à un ralentisseur électromagnétique du type de celui décrit dans le document FR-A-2 627 913. Dans ce cas le stator est traversé par l'arbre rotatif à freiner, tandis que le rotor est solidarisé en rotation avec l'arbre.

Le stator constitue alors l'inducteur de la machine et le rotor l'induit de la machine, le bobinage du rotor à segments conducteurs étant redressé par un pont de redressement approprié avant d'être appliqué aux bobines du ralentisseur comme visible à la figure 2 du document FR-A-2 627 913.

Comme visible dans les figures 13 et 14, correspondantes respectivement aux figures 8 et 12, la présence des chanfreins 124 n'est pas obligatoire.

Bien entendu, en variante, au lieu d'utiliser des segments conducteurs en forme de U on peut utiliser deux segments correspondant chacun à une branche du U et soudés pour reconstituer un U.

Dans ce cas chaque chignon du bobinage 14 comporte des soudures. Bien entendu les deux branches du U peuvent ne pas être symétriques. Par exemple on peut adopter les dispositions décrites dans le document US-A-2 407 935 et remplacer les anneaux de connexion par des soudures selon l'invention.

Dans les figures 1 et 5 la base B des segments 16 appartient au chignon du stator le plus proche du palier arrière du support. On peut inverser les structures, la base étant alors plus proche du palier avant.

## Revendications

1. Procédé d'assemblage de segments conducteurs (16) d'un bobinage de rotor ou de stator d'une machine électrique rotative, comprenant les étapes consistant à :
- insérer les segments conducteurs (16) dans des fentes (18) ménagées dans un noyau (12) du rotor ou du stator de sorte que les segments s'étendent en saillie au-delà de ce dernier par leurs extrémités libres,
- plier les extrémités libres des segments conducteurs, et
- souder deux à deux les segments conducteurs (16), par leurs extrémités libres en saillie, pour former un bobinage autour du rotor ou du stator,
**caractérisé en ce que** les segments conducteurs étant constitués chacun d'un fil en matériau électriquement conducteur revêtu d'une couche de matériau électriquement isolant, la couche de matériau électriquement isolant est supprimée, dans la zone de soudage des segments conducteurs, par le moyen utilisé pour le soudage de ces derniers
et **en ce que** l'étape de suppression de la couche de matériau électriquement isolant est réalisée lors du soudage des segments conducteurs (16).

2. Procédé d'assemblage selon la revendication 1, **caractérisé en ce que**, postérieurement au soudage des segments conducteurs, on procède à une étape d'élimination de débris de matériau électriquement isolant, engendrés lors du soudage.

3. Procédé d'assemblage selon la revendication 2, **caractérisé en ce que** l'étape d'élimination des débris comporte une phase de brossage des zones soudées suivie d'une phase d'aspiration.

4. Procédé d'assemblage selon la revendication 1, **caractérisé en ce que** le soudage est un soudage de type par faisceau d'électrons.

5. Procédé d'assemblage selon la revendication 4, **caractérisé en ce que** l'axe général du faisceau d' électrons est incliné d'environ 45° par rapport à l'axe du rotor ou du stator.

6. Procédé d'assemblage selon la revendication 4, **caractérisé en ce que**, au cours du soudage, le faisceau d'électrons est animé d'un mouvement de balayage sur toute la zone de soudage.

7. Procédé d'assemblage selon la revendication 1, **caractérisé en ce que** le soudage est un soudage laser.

8. Procédé d'assemblage selon la revendication 7, **caractérisé en ce que** le moyen de soudage est piloté de manière séquentielle, le faisceau laser étant interrompu entre deux opérations de soudage.

9. Procédé selon la revendication 8, **caractérisé en ce que** pendant l'opération de soudage le faisceau laser est fixe par rapport aux extrémités libres (22 et 24) à à souder des segments conducteurs.

10. Procédé selon la revendication 9, **caractérisé en ce que** les extrémités libres (22 et 24) à souder présentent un chanfrein pour formation d'un cordon de soudure pénétrant présentant un triangle interne.

## Patentansprüche

1. Verfahren zum Zusammenbau von Leitersegmenten (16) einer Rotor- oder Statorwicklung einer elektrischen Rotationsmaschine, das die Schritte enthält, die darin bestehen:
- die Leitersegmente (16) in in einem Kern (12) des Rotors oder des Stators vorgesehene Schlitze (18) derart einzuführen, dass die Segmente sich durch ihre freien Enden über diesen letzteren vorstehend erstrecken,
- die freien Enden der Leitersegmente umzubiegen, und
- die Leitersegmente (16) über ihre vorstehenden freien Enden paarweise zu verschweißen, um eine Wicklung um den Rotor oder den Stator zu formen,
**dadurch gekennzeichnet, dass** bei Leitersegmenten, die je aus einem Draht aus elektrisch leitendem Material bestehen, der mit einer Schicht aus elektrisch isolierendem Material verkleidet ist, die Schicht aus elektrisch isolierendem Material in der Schweißzone der Leitersegmente durch die zum Schweißen dieser letzteren verwendete Einrichtung beseitigt wird,
und dass der Schritt des Beseitigens der Schicht aus elektrisch isolierendem Material beim Schweißen der Leitersegmente (16) durchgeführt wird.

2. Zusammenbauverfahren nach Anspruch 1, **dadurch gekennzeichnet, dass** nach dem Schweißen der Leitersegmente ein Schritt des Entfernens von beim Schweißen erzeugten Abfällen von elektrisch leitendem Material durchgeführt wird.

3. Zusammenbauverfahren nach Anspruch 2, **dadurch gekennzeichnet, dass** der Schritt des Entfernens der Abfälle einen Schritt des Bürstens der geschweißten Zonen gefolgt von einer Saugphase aufweist.

4. Zusammenbauverfahren nach Anspruch 1, **dadurch gekennzeichnet, dass** das Schweißen ein Schweißen von der Art mit Elektronenstrahl ist.

5. Zusammenbauverfahren nach Anspruch 4, **dadurch gekennzeichnet, dass** die allgemeine Achse des Elektronenstrahls um etwa 45° bezüglich der Achse des Rotors oder des Stators geneigt ist.

6. Zusammenbauverfahren nach Anspruch 4, **dadurch gekennzeichnet, dass** dem Elektronenstrahl während des Schweißens eine Abtastbewegung über die ganze Schweißzone verliehen wird.

7. Zusammenbauverfahren nach Anspruch 1, **dadurch gekennzeichnet, dass** das Schweißen ein Laserschweißen ist.

8. Zusammenbauverfahren nach Anspruch 7, **dadurch gekennzeichnet, dass** die Schweißeinrichtung sequentiell gesteuert wird, wobei der Laserstrahl zwischen zwei Schweißvorgängen unterbrochen wird.

9. Zusammenbauverfahren nach Anspruch 8, **dadurch gekennzeichnet, dass** während des Schweißvorgangs der Laserstrahl bezüglich der zu schweißenden freien Enden (22 und 24) der Leitersegmente ortsfest ist.

10. Zusammenbauverfahren nach Anspruch 9, **dadurch gekennzeichnet, dass** die zu schweißenden freien Enden (22 und 24) eine Abschrägung zur Bildung einer eindringenden Schweißnaht aufweisen, die ein inneres Dreieck aufweist.

## Claims

1. Method for assembling conductive segments (16) of a rotor or stator winding of a rotary electric machine, comprising the steps of:
- inserting the conductive segments (16) into slots (18) formed in a core (12) of the rotor or stator in such a way that the free ends of the segments project beyond the rotor or stator,
- bending the free ends of the conductive segments, and
- welding the conductive segments (16) in pairs, at their projecting free ends, to form a winding around the rotor or stator,
**characterized in that** each of the conductive segments is composed of a wire of electrically conductive material coated with a layer of electrically insulating material, and the layer of electrically insulating material is removed, in the area of the welding of the conductive segments, by the means used for welding the latter,
and **in that** the step of removing the layer of electrically insulating material is carried out during the welding of the conductive segments (16).

2. Assembly method according to Claim 1, **characterized in that**, after the welding of the conductive segments, a step of removing the debris of electrically insulating material created during the welding is carried out.

3. Assembly method according to Claim 2, **characterized in that** the step of removing the debris includes a stage of brushing the welded areas, followed by a stage of suction.

4. Assembly method according to Claim 1, **characterized in that** the welding is of the electron beam type.

5. Assembly method according to Claim 4, **characterized in that** the general axis of the electron beam is inclined at approximately 45° to the axis of the rotor or of the stator.

6. Assembly method according to Claim 4, **characterized in that**, during the welding, the electron beam is made to move with a scanning movement over the whole welding area.

7. Assembly method according to Claim 1, **characterized in that** the welding is laser welding.

8. Assembly method according to Claim 7, **characterized in that** the welding means is controlled in a sequential manner, the laser beam being interrupted between two welding operations.

9. Method according to Claim 8, **characterized in that**, during the welding operation, the laser beam is fixed with respect to the free ends (22 and 24) of the conductive segments to be welded.

10. Method according to Claim 9, **characterized in that** the free ends (22 and 24) to be welded have chamfers for the formation of a penetrating weld bead creating an internal triangle.
